# EUROPEAN PATENT SPECIFICATION

(11) **EP 4 085 739 B1**
(45) Date of publication and mention of the grant of the patent: **01.11.2023**
(21) Application number: 22171299.5
(22) Date of filing: 03.05.2022
(51) Int. Cl.: A01B 59/06, A01B 59/00

(54) **HITCHING SYSTEM FOR AN AGRICULTURAL OR INDUSTRIAL VEHICLE**
ANHÄNGESYSTEM FÜR EIN LANDWIRTSCHAFTLICHES ODER INDUSTRIELLES FAHRZEUG
SYSTÈME D'ATTELAGE POUR UN VÉHICULE AGRICOLE OU INDUSTRIEL

(30) Priority: 05.05.2021 IT 202100011486
(43) Date of publication of application: 09.11.2022
(73) Proprietor: CBM - S.P.A., 41122 Modena (IT)
(72) Inventor: Cornia, Enrico Maria, 41122 Modena (IT)
(74) Representative: Zoli, Filippo

(56) References cited:
- EP-A1- 1 308 075
- EP-A1- 1 332 657
- EP-A1- 2 671 440
- EP-A1- 3 549 417
- EP-A1- 3 815 483
- DE-A1-102018 206 628
- US-A1- 2019 299 731

## Description

### Technical Field

The present invention relates to a hitching system for an agricultural or industrial vehicle.

In particular, the present hitching system is applicable to a three-point hitch device for an agricultural or industrial vehicle, such as e.g. a tractor.

### Background Art

Three-point hitch devices are frequently used to attach implements or auxiliary vehicles to the rear of the agricultural vehicle.

The hitching systems of known type generally comprise at least one lifting arm and at least one lifting rod connected to the lifting arm itself in a kinematic manner.

The lifting arm is provided with one end which can be connected in a swivel manner to a towing vehicle and with an opposite end associable with a piece of auxiliary equipment. The lifting arm is provided with one end connected to an actuator, responsible for the actual movement of the lifting arm, and with one end connected to the lifting arm.

The lifting rod comprises a pair of jaw elements arranged facing each other and adapted to receive the lifting arm by interposition.

The hitching systems of known type also comprise connecting means between the lifting rod and the lifting arm comprising at least one pin insertable between the jaw elements and the lifting arm.

Some types of implements, which require draft control, such as e.g. plows, require that there be a fixed configuration between the lifting rods and the lifting arms. This allows for accurate control of the equipment position which is desirable when working with draft control.

For other types of implements, however, the operation is more efficient when the lifting arms can "float" within a predefined range with respect to the lifting rods. This "floating" configuration is ideal when it is required, for example, that the equipment follow the ground contours in a non-rigid manner.

For this purpose, it is envisaged that the lifting arms may be clamped in a working position, i.e. in a fixed operating position, or may move, in use, with respect to the lifting rods (floating operating position).

More particularly, each of the jaw elements comprises an elongated slot inside which the pin can slide along a predefined stroke to allow the displacement, in use, of the relevant lifting arm.

At least one end of the pin is provided with an ending plate of elongated conformation and the jaw elements comprise a pair of stop elements arranged alongside the slot, parallel thereto and guiding the sliding of the slot.

The hitching systems of known type do have some drawbacks mainly related to the fact that, in the absence of the equipment, the lifting arms may interfere with the additional components of the agricultural vehicle, with the risk of damage and/or malfunction.

To overcome this drawback, it is envisaged that the position of the lifting arms may be raised to an elevated configuration suitable for displacing the agricultural vehicle in the absence of the equipment.

A three-point hitch device is known from EP 2 671 440 A1 and provided with a connecting mechanism between the lifting arms and the lifting rods which allows positioning the lifting arms between three different configurations of use, a fixed operating configuration, a floating operating configuration and a transport configuration.

In particular, the device of EP 2 671 440 A1 provides that the ending plate may be rotated between two working positions, in one of which it is positioned between the stop elements in a sliding manner, thus making the floating operating configuration, and in the other it leans against the lower or upper edge of the same, consequently clamping the position of the relevant lifting arm and obtaining the fixed operating configuration and the transport configuration, respectively.

However, the device of EP 2 671 440 A1 also has drawbacks because, in the transport configuration, the lifting arms are positioned very high and still risk interfering with other components. This is due in particular to the extension of the stop elements, which must be sufficiently extended to guide the sliding of the ending plate in the floating configuration.

It is clear, then, that the known hitching systems are susceptible to further refinement.

### Description of the Invention

The main aim of the present invention is to devise a hitching system for an agricultural or industrial vehicle which allows for practical and efficient positioning of the lifting arms among a plurality of different configurations of use.

A further object of the present invention is to devise a hitching system for an agricultural or industrial vehicle which allows the lifting arms to be easily arranged in a configuration of transport which, on the one hand, allows for easy movement of the agricultural vehicle in the absence of equipment and, on the other hand, does not result in undesirable interaction of the lifting arms with the other components of the vehicle or of the hitching system itself.

Another object of the present invention is to devise a hitching system for an agricultural or industrial vehicle which allows the mentioned drawbacks of the prior art to be overcome within a simple, rational, easy and effective to use as well as affordable solution.

The aforementioned objects are achieved by the present hitching system for an agricultural or industrial vehicle having the characteristics of claim 1.

### Brief Description of the Drawings

Other characteristics and advantages of the present invention will become more apparent from the description of a preferred, but not exclusive, embodiment of a hitching system for an agricultural or industrial vehicle, illustrated by way of an indicative, yet non-limiting example, in the accompanying tables of drawings wherein:
Figure 1 is an axonometric view of a hitching system according to the invention mounted on an agricultural vehicle;

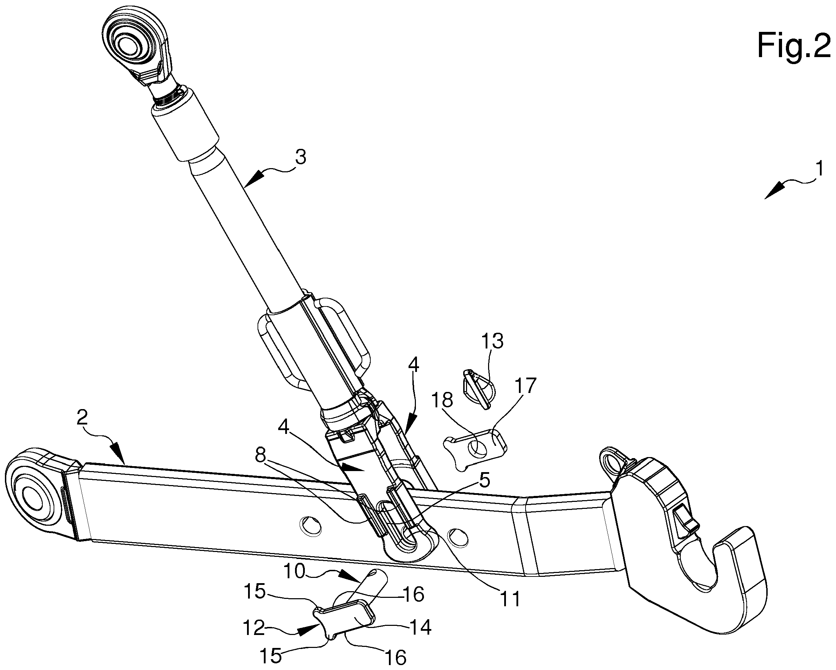

Figure 2 is a partly exploded axonometric view of the hitching system according to the invention;
Figures 3-6 are side views of the hitching system according to the invention in different configurations of use.

### Embodiments of the Invention

With particular reference to such figures, reference numeral 1 globally indicates a hitching system for an agricultural or industrial vehicle.

The present hitching system 1 is applicable to a three-point hitch device intended to be attached to an agricultural or industrial vehicle V, such as e.g. a tractor or the like.

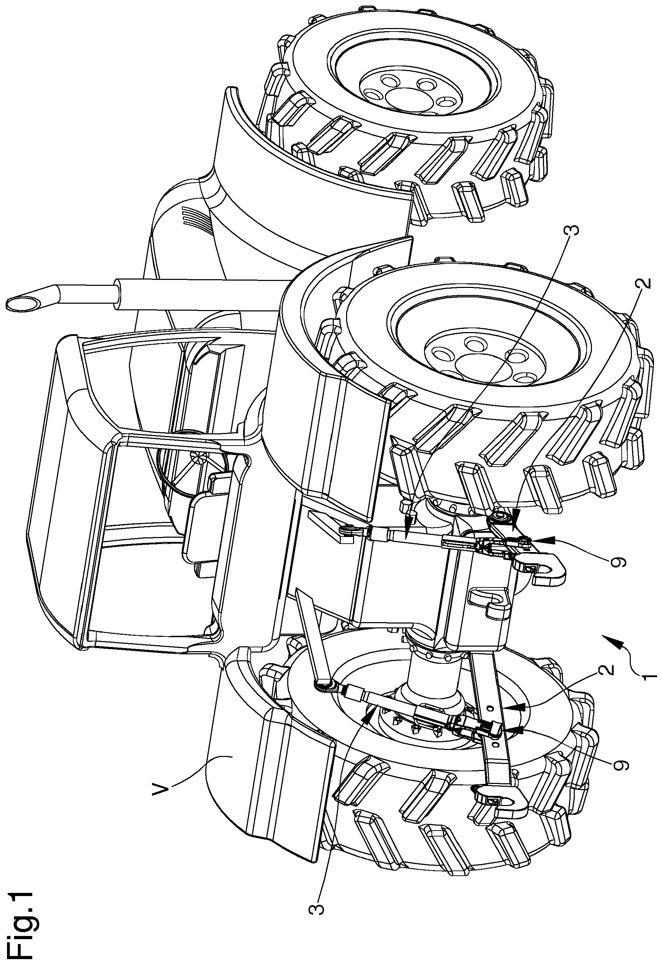

Figure 1 shows a hitching system 1 installed at the rear of an agricultural vehicle V. It cannot, however, be ruled out that the hitching system 1 may be mounted in front of the agricultural vehicle V.

The hitching system 1 comprises at least one lifting arm 2 and at least one lifting rod 3 connected to the lifting arm 2 in a kinematic manner.

Specifically, in the embodiment shown in Figure 1, the hitching system 1 comprises a pair of lifting arms 2 and a pair of lifting rods 3. As visible in the figures, the lifting rods 3 have an elongated conformation and extend along a longitudinal direction identified in the figures by the reference letter D.

Each lifting arm 2 is provided with one end connectable in a swivel manner to an agricultural or industrial vehicle V and with an opposite end associable with a piece of auxiliary equipment.

The lifting rod 3 is provided with one end connected to an actuator device and with an opposite end connected to the lifting arm 2. The actuator device, not shown in detail in the figures, is responsible for the actual movement of the lifting arm 2.

The lifting rod 3 comprises a pair of jaw elements 4 arranged facing each other and adapted to receive the lifting arm 2 by interposition.

In more detail, the jaw elements 4 are arranged at one end of the lifting rod 3. In the preferred embodiment shown in the figures, the jaw elements 4 have a substantially plate-shaped conformation and extend downwardly from the end of the lifting rod 3 opposite the actuator device. More specifically, the jaw elements 4 extend parallel to the longitudinal direction D of the lifting rod 3. In an alternative embodiment not shown in the figures, the jaw elements 4 are arranged at the end of the lifting rod 3 connected to the actuator device.

Each of the jaw elements 4 comprises at least one slot 5 of elongated shape. The slot 5, in turn, develops on the jaw element 4 parallel to the longitudinal direction D of the lifting rod 3 or inclined with respect thereto by an angle of less than 90°.

The slot 5 is of the blind type and has, therefore, an upper end 6 and a lower end 7.

The terms "lower" and "upper" used in this disclosure refer to the position taken, in use, by the elements to which they refer.

At least one of the jaw elements 4, preferably both, also comprises at least one pair of stop elements 8 arranged alongside the corresponding slot 5 and extending parallel thereto.

The stop elements 8 protrude outwardly from the jaw element 4.

Conveniently, the stop elements 8 are arranged at a stretch of the slot 5. In particular, the lower edge of the stop elements 8 is arranged on top of the lower end 7 of the slot 5 and the upper edge of the stop elements 8 is arranged on top of the upper end 6 of the slot 5.

The hitching system 1 is also provided with connecting means 9 between the lifting rod 3 and the lifting arm 2.

The connecting means 9 comprise at least one pin 10 insertable through the slots 5 of the jaw elements 4 and in at least one hole 11 defined on the lifting arm 2.

Specifically, as shown in the figures, the lifting arm 2 may comprise one or more holes 11 arranged aligned along the longitudinal direction of the lifting arm itself.

The connecting means 9 also comprise at least one ending plate 12 having an elongated shape and associated with one end of the pin 10.

The ending plate 12 is adapted to abut against one of the jaw elements 4 as a result of the insertion of the pin 10 into the hole 11 through the slots 5 and has the function of retaining the pin 10 from sliding along at least one transverse direction to the lifting rod 3.

Conveniently, the connecting means 9 comprise retaining means 13 of the pin 10 inside the hole 11. The retaining means 13 are associated with the pin 10 at the opposite end with respect to the ending plate 12.

The retaining means 13 will be described in more detail later in the present disclosure.

According to the invention, the ending plate 12 comprises at least one main body 14 and at least one pair of protrusions 15 arranged at one end of the main body 14 and adapted to abut against the stop elements 8. The main body 14 has an elongated conformation and the protrusions 15 extend transversely with respect to the longitudinal axis A of the main body 14. The protrusions 15 therefore increase the transverse overall dimensions of the main body 14.

Specifically, the main body 14 has a substantially rectangular shape and has at least one pair of lateral edges 16 which are substantially parallel to each other.

In more detail, the protrusions 15 are arranged symmetrically with respect to a median plane P passing through the longitudinal axis A of the main body 14.

Each of the protrusions 15 is therefore protruding with respect to the relevant lateral edge 16.

The ending plate 12 can be positioned in a plurality of different configurations of use.

According to the invention, the ending plate 12 is positionable in:
- a lower clamping configuration, wherein the lateral edge of the main body 14 abuts against the lower end of the stop elements 8;
- a floating configuration, wherein it is rotated with respect to the lower clamping configuration, wherein the main body 14 is positioned between the stop elements 8 and the pin 10 is movable along the slots 5; and
- an upper clamping configuration, wherein it is rotated with respect to both the lower clamping configuration and with respect to the floating configuration and wherein the protrusions 15 rest against the upper end of the stop elements 8.

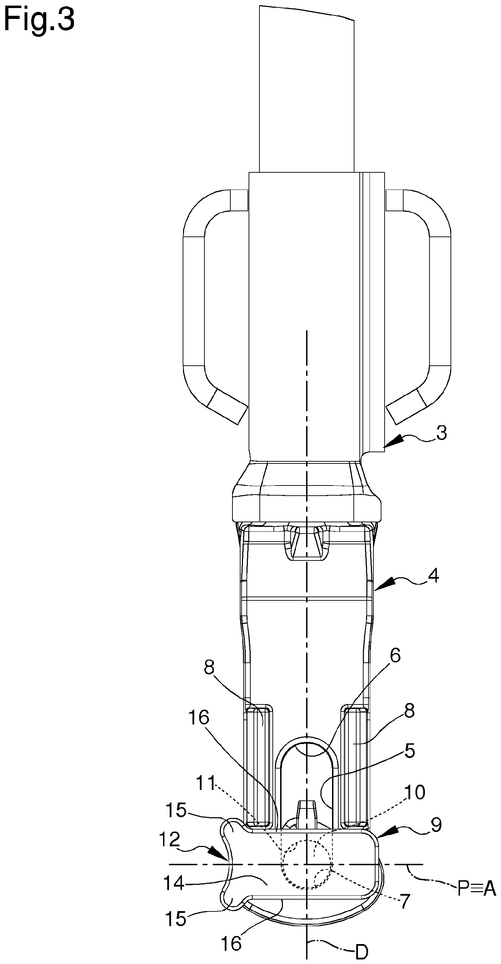

In more detail, in the lower clamping configuration (Figure 3), the hitching system 1 allows for fixed towing of the agricultural equipment.

In such a configuration, the ending plate 12 is arranged transversely with respect to the slot 5 and to the stop elements 8.

Moreover, in the lower clamping configuration, the pin 10 abuts against the lower end 7. The hitching system 1 is, therefore, clamped, on the one hand, by the interaction between the pin 10 and the lower end 7 and, on the other hand, by the interaction between a lateral edge 16 and the stop elements 8.

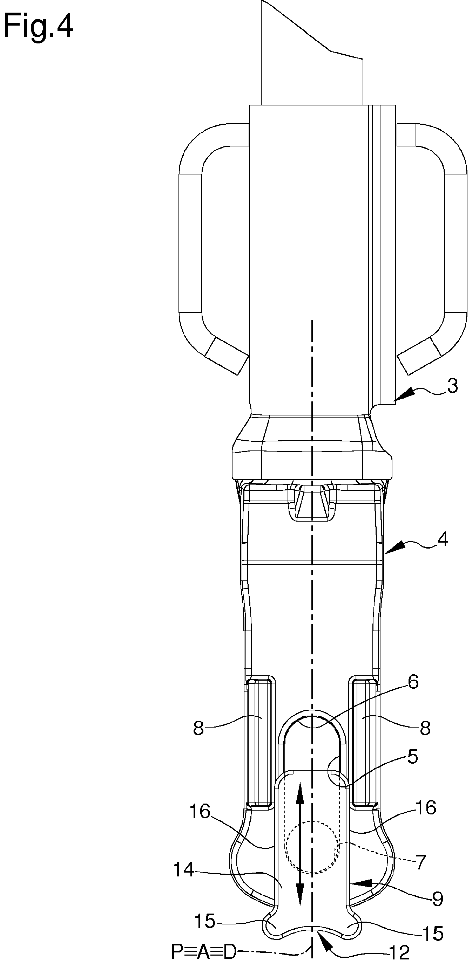

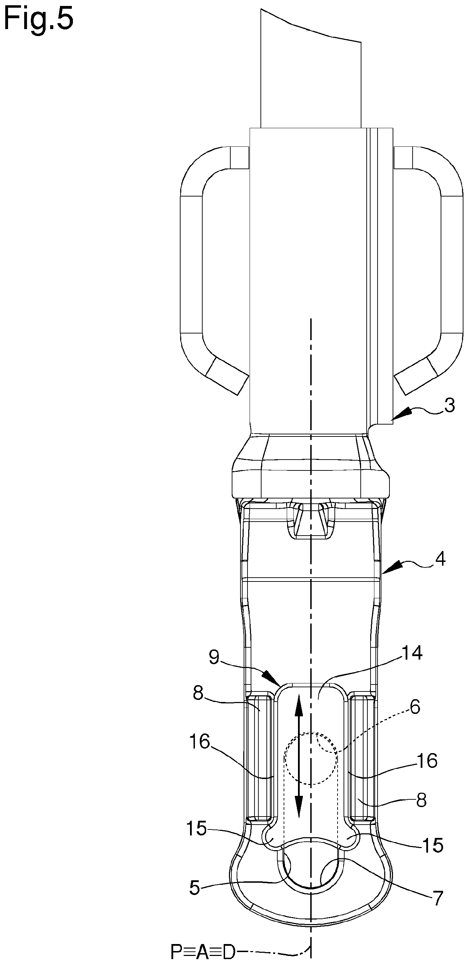

In the floating configuration (Figures 4 and 5), the hitching system 1 allows the agricultural equipment to be towed in a floating manner, thanks to the possibility of the lifting arm 2 to swing as a result of the movement of the pin 10 along the slots 5.

In particular, the end-of-stroke positions of the pin 10 are defined by the interaction thereof with the lower end 7 and the upper end 6 of the slot 5.

Appropriately, in fact, the linear distance between the lower end 7 and the upper end 6 is greater than the linear distance between the axis of the pin 10 and the areas of the protrusions 15 adapted to interact with the stop elements 8.

In such a configuration, the ending plate 12 is rotated by 90° with respect to the lower clamping configuration.

In this operating configuration, the main body 14 is arranged between the stop elements 8 and slides with respect to them.

The lateral edges of the main body 14 are arranged parallel to the stop elements 8.

The stop elements 8, therefore, operate as a guide for the sliding of the pin with respect to the lifting rod 3.

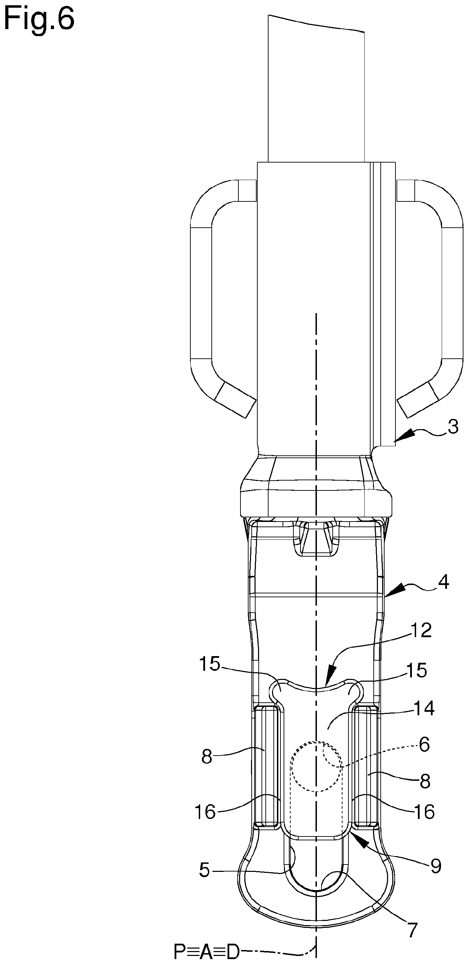

In the upper clamping configuration (Figure 6), on the other hand, the lifting arm 2 is raised with respect to the lower clamping configuration and allows for the transit of the agricultural vehicle V without interfering with additional components of the vehicle itself.

Conveniently, in such a configuration, the ending plate 12 is rotated by 180° with respect to the floating configuration.

The lateral edges of the main body 14 are arranged parallel to the stop elements 8.

In addition, in the upper clamping configuration, the pin 10 abuts against the upper end 6.

The hitching system 1 is, therefore, clamped, on the one hand, by the interaction of the pin 10 with the upper end 6 and, on the other hand, by the interaction of the protrusions 15 with the stop elements 8.

Conveniently, the connecting means 9 comprise a fixing plate 17 positioned between one of either the jaw elements 4 or the retaining means 13.

The fixing plate 17 comprises an opening 18 adapted to receive the pin 10 at the opposite end with respect to the ending plate 12.

Advantageously, the fixing plate 17 has a conformation substantially corresponding to the ending plate 12 and is adapted to operate in conjunction with the stop elements 8 in at least one of either the lower clamping configuration, the floating configuration or the upper clamping configuration.

In more detail, the fixing plate 17 is rotatable similarly to the ending plate 12 to arrange the hitching system 1 between the various configurations of use.

For this purpose, both jaw elements 4 are provided with the pair of stop elements 8.

The retaining means 13 are of a type known to the person skilled in the art and, in the embodiment shown in the figures, comprise a spring hook insertable into the pin 10.

The retaining means 13 are adapted to prevent the pin itself from sliding along a direction transverse to the lifting rod 3.

The retaining means 13 are usefully of the removable type so that the pin 10 can be removed and positioned depending on the desired configuration of use.

It has in practice been ascertained that the described invention achieves the intended objects, and in particular the fact is emphasized that the present hitching system for an agricultural or industrial vehicle allows practical and efficient positioning of the lifting arms among a plurality of different configurations of use. In fact, due to the simple rotation of the pin, the mutual position between the lifting arm and the lifting rod is easily variable.

Moreover, the presence of the protrusions in the ending plate allows the lifting arms to be easily arranged in a transport position with reduced overall dimensions and at a lower height with respect to known solutions.

## Claims

1. Hitching system (1) for an agricultural or industrial vehicle, comprising:
- at least one lifting arm (2) provided with one end that can be connected in a swivel manner to the agricultural or industrial vehicle (V) and with an opposite end associable with an auxiliary equipment;
- at least one lifting rod (3) provided with one end connectable to an actuator device and with an opposite end kinematically connected to said lifting arm (2), said lifting rod (3) comprising a pair of jaw elements (4) arranged facing each other and adapted to receive said lifting arm (2) by interposition, wherein each of said jaw elements (4) comprises at least one slot (5) of elongated shape, and wherein at least one of said jaw elements (4) comprises at least one pair of stop elements (8) arranged alongside said slot (5) and extending parallel thereto;
- connecting means (9) between said lifting rod (3) and said lifting arm (2) comprising at least one pin (10) insertable through the slots (5) of said jaw elements (4) and in at least one hole (11) defined on said lifting arm (2), and comprising at least one ending plate (12) having an elongated shape and associated with at least one end of said pin (10);
**characterized in that** said ending plate (12) comprises at least one main body (14) and at least one pair of protrusions (15) arranged at one end of said main body (14) and adapted to abut against said stop elements (8), and wherein the hitching system is configured such that said ending plate (12) is alternatively positionable in a lower clamping configuration, wherein the lateral edge of said main body (14) abuts against the lower end of said stop elements (8), in a floating configuration, wherein said ending plate (12) is rotated with respect to said lower clamping configuration and wherein said main body (14) is interposed between said stop elements (8) and said pin (10) is movable along said slots (5), and in an upper clamping configuration, wherein said ending plate (12) is rotated with respect to said lower clamping configuration and with respect to said floating configuration and wherein said protrusions (15) rest against the upper end of said stop elements (8).

2. Hitching system (1) according to claim 1, **characterized by** the fact that said slot (5) comprises an upper end (6) and a lower end (7), and by the fact that, in said floating configuration, the end-of-stroke positions of said pin (10) are defined by the interaction thereof with the lower end (7) and the upper end (6) of said slot (5).

3. Hitching system (1) according to claim 2, **characterized by** the fact that the linear distance between the upper end (6) and the lower end (7) of said slot (5) is greater than the linear distance between the axis of said pin (10) and the areas of said protrusions (15) adapted to interact with said stop elements (8).

4. Hitching system (1) according to one or more of the preceding claims, **characterized by** the fact that, in said floating configuration, said ending plate (12) is rotated by 90° with respect to said lower clamping configuration.

5. Hitching system (1) according to one or more of the preceding claims, **characterized by** the fact that, in said upper clamping configuration, said ending plate (12) is rotated by 180° with respect to said floating configuration.

6. Hitching system (1) according to one or more of the preceding claims, **characterized by** the fact that, in said floating configuration and in said upper clamping configuration, the lateral edges of said main body (14) are arranged parallel to said stop elements (8).

7. Hitching system (1) according to one or more of the preceding claims, **characterized by** the fact that, in said floating configuration, said main body (14) is movable by shifting with respect to said stop elements (8).

8. Hitching system (1) according to one or more of the preceding claims, **characterized by** the fact that said stop elements (8) are arranged at a stretch of said slot (5), the lower edge of said stop elements (8) being arranged on top of the lower end (7) of said slot (5) and the upper edge of said stop elements (8) being arranged on top of the upper end (6) of said slot (5).

9. Hitching system (1) according to one or more of the preceding claims, **characterized by** the fact that said main body (14) has an elongated conformation and said protrusions (15) extend transversely with respect to the longitudinal axis (A) of the main body itself.

10. Hitching system (1) according to one or more of the preceding claims, **characterized by** the fact that said protrusions (15) are arranged symmetrically with respect to a median plane (P) passing through the longitudinal axis (A) of said main body (14).

11. Hitching system (1) according to one or more of the preceding claims, **characterized by** the fact that said connecting means (9) comprise retaining means (13) of said pin (10) inside said hole (11).

12. Hitching system (1) according to one or more of the preceding claims, **characterized by** the fact that said connecting means (9) comprise a fixing plate (17) positioned between one of either said jaw elements (4) or said retaining means (13), said fixing plate (17) comprising an opening (18) adapted to receive said pin (10).

13. Hitching system (1) according to claim 12, **characterized by** the fact that said fixing plate (17) has a conformation substantially corresponding to said ending plate (12) and is adapted to operate in conjunction with said stop elements (8) in at least one of either said lower clamping configuration, said floating configuration and said upper clamping configuration.

## Patentansprüche

1. Anhängesystem (1) für ein landwirtschaftliches oder industrielles Fahrzeug, umfassend:
- mindestens einen Hubarm (2), der mit einem Ende schwenkbar mit dem landwirtschaftlichen oder industriellen Fahrzeug (V) verbunden werden kann und dessen gegenüberliegendes Ende einer Hilfseinrichtung zuordnenbar ist;
- mindestens eine Hubstange (3), die mit einem Ende versehen ist, das mit einer Betätigungsvorrichtung verbindbar ist, und mit einem gegenüberliegenden Ende, das kinematisch mit dem Hubarm (2) verbunden ist, wobei die Hubstange (3) ein Paar von Backenelementen (4) umfasst, die einander zugewandt angeordnet und ausgebildet sind, den Hubarm (2) durch dazwischen Anordnen aufzunehmen, wobei jedes der Backenelemente (4) mindestens einen Schlitz (5) mit länglicher Form umfasst, und wobei mindestens eines der Backenelemente (4) mindestens ein Paar von Anschlagelementen (8) umfasst, die entlang des Schlitzes (5) angeordnet sind und sich parallel dazu erstrecken;
- Verbindungsmittel (9) zwischen der Hubstange (3) und dem Hubarm (2), umfassend mindestens einen Bolzen (10), der durch die Schlitze (5) der Backenelemente (4) und in mindestens ein an dem Hubarm (2) definiertes Loch (11) einführbar ist, und umfassend mindestens eine Endplatte (12), die eine längliche Form aufweist und mindestens einem Ende des Bolzens (10) zugeordnet ist;
**dadurch gekennzeichnet, dass** die Endplatte (12) mindestens einen Hauptkörper (14) und mindestens ein Paar von Vorsprüngen (15) umfasst, die an einem Ende des Hauptkörpers (14) angeordnet und ausgebildet sind, um an den Anschlagelementen (8) anzuliegen, und wobei das Anhängesystem ausgebildet ist, dass die Endplatte (12) alternativ in einer unteren Klemmkonfiguration, in der die Seitenkante des Hauptkörpers (14) an dem unteren Ende der Anschlagelemente (8) anliegt, in einer schwimmenden Konfiguration, in der die Endplatte (12) gegenüber der unteren Klemmkonfiguration gedreht ist und in der der Hauptkörper (14) zwischen den Anschlagelementen (8) angeordnet ist und der Bolzen (10) entlang der Schlitze (5) beweglich ist, und in einer oberen Klemmkonfiguration positionierbar ist, in der die Endplatte (12) gegenüber der unteren Klemmkonfiguration und gegenüber der schwimmenden Konfiguration gedreht ist und in der die Vorsprünge (15) an dem oberen Ende der Anschlagelemente (8) anliegen.

2. Anhängesystem (1) nach Anspruch 1, **dadurch gekennzeichnet, dass** der Schlitz (5) ein oberes Ende (6) und ein unteres Ende (7) aufweist, und dass in der schwimmenden Konfiguration die Hubendpositionen des Bolzens (10) durch dessen Zusammenwirken mit dem unteren Ende (7) und dem oberen Ende (6) des Schlitzes (5) definiert sind.

3. Anhängesystem (1) nach Anspruch 2, **dadurch gekennzeichnet, dass** der lineare Abstand zwischen dem oberen Ende (6) und dem unteren Ende (7) des Schlitzes (5) größer ist als der lineare Abstand zwischen der Achse des Bolzens (10) und den Bereichen der Vorsprünge (15), die zum Zusammenwirken mit den Anschlagelementen (8) ausgebildet sind.

4. Anhängesystem (1) nach einem oder mehreren der vorhergehenden Ansprüche, **dadurch gekennzeichnet, dass** in der schwimmenden Konfiguration die Endplatte (12) um 90° gegenüber der unteren Klemmkonfiguration gedreht ist.

5. Anhängesystem (1) nach einem oder mehreren der vorhergehenden Ansprüche, **dadurch gekennzeichnet, dass** in der oberen Klemmkonfiguration die Endplatte (12) um 180° gegenüber der schwimmenden Konfiguration gedreht ist.

6. Anhängesystem (1) nach einem oder mehreren der vorhergehenden Ansprüche, **dadurch gekennzeichnet, dass** in der schwimmenden Konfiguration und in der oberen Klemmkonfiguration die Seitenkanten des Hauptkörpers (14) parallel zu den Anschlagelementen (8) angeordnet sind.

7. Anhängesystem (1) nach einem oder mehreren der vorhergehenden Ansprüche, **dadurch gekennzeichnet, dass** in der schwimmenden Konfiguration der Hauptkörper (14) durch Verschieben in Bezug auf die Anschlagelemente (8) beweglich ist.

8. Anhängesystem (1) nach einem oder mehreren der vorhergehenden Ansprüche, **dadurch gekennzeichnet, dass** die Anschlagelemente (8) an einer Strecke des Schlitzes (5) angeordnet sind, wobei die untere Kante der Anschlagelemente (8) oberhalb des unteren Endes (7) des Schlitzes (5) und die obere Kante der Anschlagelemente (8) oberhalb des oberen Endes (6) des Schlitzes (5) angeordnet ist.

9. Anhängesystem (1) nach einem oder mehreren der vorhergehenden Ansprüche, **dadurch gekennzeichnet, dass** der Hauptkörper (14) eine längliche Form aufweist und die Vorsprünge (15) sich quer zu der Längsachse (A) des Hauptkörpers selbst erstrecken.

10. Anhängesystem (1) nach einem oder mehreren der vorhergehenden Ansprüche, **dadurch gekennzeichnet, dass** die Vorsprünge (15) symmetrisch in Bezug auf eine durch die Längsachse (A) des Hauptkörpers (14) verlaufende Mittelebene (P) angeordnet sind.

11. Anhängesystem (1) nach einem oder mehreren der vorhergehenden Ansprüche, **dadurch gekennzeichnet, dass** die Verbindungsmittel (9) Mittel (13) zum Halten des Bolzens (10) in dem Loch (11) umfassen.

12. Anhängesystem (1) nach einem oder mehreren der vorhergehenden Ansprüche, **dadurch gekennzeichnet, dass** die Verbindungsmittel (9) eine Befestigungsplatte (17) umfassen, die entweder zwischen den Backenelementen (4) oder den Haltemitteln (13) angeordnet ist, wobei die Befestigungsplatte (17) eine Öffnung (18) umfasst, die ausgebildet ist, den Bolzen (10) aufzunehmen.

13. Anhängesystem (1) nach Anspruch 12, **dadurch gekennzeichnet, dass** die Befestigungsplatte (17) eine Form hat, die im Wesentlichen der Endplatte (12) entspricht, und ausgebildet ist, in Verbindung mit den Anschlagelementen (8) in der unteren Klemmkonfiguration, der schwimmenden Konfiguration und/oder der oberen Klemmkonfiguration zu wirken.

## Revendications

1. - Système d'attelage (1) pour un véhicule agricole ou industriel, comprenant :
- au moins un bras de levage (2) comportant une extrémité qui peut être reliée d'une manière pivotante au véhicule agricole ou industriel (V) et une extrémité opposée apte à être associée à un équipement auxiliaire ;
- au moins une tige de levage (3) comportant une extrémité apte à être reliée à un dispositif actionneur et une extrémité opposée reliée cinématiquement audit bras de levage (2), ladite tige de levage (3) comprenant une paire d'éléments mâchoires (4) disposés face à face et agencés pour recevoir ledit bras de levage (2) par interposition, chacun desdits éléments mâchoires (4) comprenant au moins une fente (5) de forme allongée, et au moins un desdits éléments mâchoires (4) comprenant au moins une paire d'éléments d'arrêt (8) disposés à côté de ladite fente (5) et s'étendant parallèlement à celle-ci ;
- des moyens de liaison (9) entre ladite tige de levage (3) et ledit bras de levage (2) comprenant au moins une goupille (10) apte à introduit à travers les fentes (5) desdits éléments mâchoires (4) et dans au moins un trou (11) défini sur ledit bras de levage (2), et comprenant au moins une plaque d'extrémité (12) ayant une forme allongée et associée à au moins une extrémité de ladite goupille (10) ;
**caractérisé par le fait que** ladite plaque d'extrémité (12) comprend au moins un corps principal (14) et au moins une paire de saillies (15) disposées à une extrémité dudit corps principal (14) et agencées pour venir en butée contre lesdits éléments d'arrêt (8), et le système d'attelage étant configuré de telle sorte que ladite plaque d'extrémité (12) est apte à être positionnée alternativement dans une configuration de serrage inférieure, dans laquelle le bord latéral dudit corps principal (14) est en butée contre l'extrémité inférieure desdits éléments d'arrêt (8), dans une configuration de flottement, dans laquelle ladite plaque d'extrémité (12) est tournée par rapport à ladite configuration de serrage inférieure et dans laquelle ledit corps principal (14) est interposé entre lesdits éléments d'arrêt (8) et ladite goupille (10) est mobile le long desdites fentes (5), et dans une configuration de serrage supérieure, dans laquelle ladite plaque d'extrémité (12) est tournée par rapport à ladite configuration de serrage inférieure et par rapport à ladite configuration de flottement et dans laquelle lesdites saillies (15) reposent contre l'extrémité supérieure desdits éléments d'arrêt (8).

2. - Système d'attelage (1) selon la revendication 1, **caractérisé par le fait que** ladite fente (5) comprend une extrémité supérieure (6) et une extrémité inférieure (7), et **par le fait que**, dans ladite configuration de flottement, les positions de fin de course de ladite goupille (10) sont définies par l'interaction de celle-ci avec l'extrémité inférieure (7) et l'extrémité supérieure (6) de ladite fente (5) .

3. - Système d'attelage (1) selon la revendication 2, **caractérisé par le fait que** la distance linéaire entre l'extrémité supérieure (6) et l'extrémité inférieure (7) de ladite fente (5) est supérieure à la distance linéaire entre l'axe de ladite goupille (10) et les zones desdites saillies (15) agencées pour interagir avec lesdits éléments d'arrêt (8).

4. - Système d'attelage (1) selon une ou plusieurs des revendications précédentes, **caractérisé par le fait que**, dans ladite configuration de flottement, ladite plaque d'extrémité (12) est tournée de 90° par rapport à ladite configuration de serrage inférieure.

5. - Système d'attelage (1) selon une ou plusieurs des revendications précédentes, **caractérisé par le fait que**, dans ladite configuration de serrage supérieure, ladite plaque d'extrémité (12) est tournée de 180° par rapport à ladite configuration de flottement.

6. - Système d'attelage (1) selon une ou plusieurs des revendications précédentes, **caractérisé par le fait que**, dans ladite configuration de flottement et dans ladite configuration de serrage supérieure, les bords latéraux dudit corps principal (14) sont disposés parallèlement auxdits éléments d'arrêt (8).

7. - Système d'attelage (1) selon une ou plusieurs des revendications précédentes, **caractérisé par le fait que**, dans ladite configuration de flottement, ledit corps principal (14) est mobile par déplacement par rapport auxdits éléments d'arrêt (8).

8. - Système d'attelage (1) selon une ou plusieurs des revendications précédentes, **caractérisé par le fait que** lesdits éléments d'arrêt (8) sont disposés à une portion de ladite fente (5), le bord inférieur desdits éléments d'arrêt (8) étant disposé sur le dessus de l'extrémité inférieure (7) de ladite fente (5) et le bord supérieur desdits éléments d'arrêt (8) étant disposé sur le dessus de l'extrémité supérieure (6) de ladite fente (5).

9. - Système d'attelage (1) selon une ou plusieurs des revendications précédentes, **caractérisé par le fait que** ledit corps principal (14) a une conformation allongée et lesdites saillies (15) s'étendent transversalement par rapport à l'axe longitudinal (A) du corps principal lui-même.

10. - Système d'attelage (1) selon une ou plusieurs des revendications précédentes, **caractérisé par le fait que** lesdites saillies (15) sont disposées de manière symétrique par rapport à un plan médian (P) passant par l'axe longitudinal (A) dudit corps principal (14).

11. - Système d'attelage (1) selon une ou plusieurs des revendications précédentes, **caractérisé par le fait que** lesdits moyens de liaison (9) comprennent des moyens de retenue (13) de ladite goupille (10) à l'intérieur dudit trou (11).

12. - Système d'attelage (1) selon une ou plusieurs des revendications précédentes, **caractérisé par le fait que** lesdits moyens de liaison (9) comprennent une plaque de fixation (17) positionnée entre l'un desdits éléments mâchoires (4) ou desdits moyens de retenue (13), ladite plaque de fixation (17) comprenant une ouverture (18) agencée pour recevoir ladite goupille (10).

13. - Système d'attelage (1) selon la revendication 12, **caractérisé par le fait que** ladite plaque de fixation (17) a une conformation correspondant sensiblement à ladite plaque d'extrémité (12) et est agencée pour fonctionner conjointement avec lesdits éléments d'arrêt (8) dans au moins une de ladite configuration de serrage inférieure, de ladite configuration de flottement et de ladite configuration de serrage supérieure.
